# EUROPEAN PATENT APPLICATION

(11) **EP 3 115 899 A1**
(43) Date of publication of application: **11.01.2017**
(21) Application number: 15189922.6
(22) Date of filing: 15.10.2015
(51) Int. Cl.: G06F 11/14

(54) **ATTRIBUTE ANALYZER FOR DATA BACKUP**

(30) Priority: 09.07.2015 IN 3520CH2015
(71) Applicant: Longsand Limited, Cambridge CB4 0WZ (GB)
(72) Inventor: MURTHY, Lokesh, 560048 Bangalore (IN); TURAKANI, Sunil, 560048 Bagalore (IN); SHANTHARAJ, Nandan, 560048 Bangalore (IN)
(74) Representative: EIP

(57) **Abstract**

Examples herein involve sending a request to a server to provide candidate attributes of a candidate backup file based on attributes of a data file, the request comprising the attributes, determining that the candidate attributes received from the server match the attributes of the data file based on fuzzy logic and respective weights applied to the attributes of the data file, and recording a link to the candidate backup file to back up the data file and to avoid a duplicate of the candidate backup file in a database of the server.

## Description

### BACKGROUND

Backup services or backup environments enable client devices (e.g., personal computers, mobile devices (e.g., smartphones, mobile phones, tablet computers, etc.), servers, etc.) to store copies or versions of data files (e.g., documents, images, audio files, video files, etc.) at a remote location. Accordingly, the client devices may use backup services to maintain available local data capacity, secure data, etc. In enterprise or shared network environments, a plurality of computing devices may access or utilize a same backup service or a same backup environment. Accordingly, the plurality of computing devices may have access to the same set of backed up data files.

### BRIEF DESCRIPTION OF THE DRAWINGS

FIG. 1 is a schematic diagram of an example backup environment with a client device including an attribute analyzer implemented in accordance with an aspect of this disclosure.
FIG. 2 is a block diagram of an example attribute analyzer that may be implemented by the client device in the example backup environment of FIG. 1.
FIG. 3 is a message diagram representative of example communications exchanged in the example backup environment of FIG. 1, including example communications from/to the example attribute analyzer of FIG. 2.
FIG. 4 is a flowchart representative of example machine readable instructions that may be executed to implement the attribute analyzer of FIG. 2.
FIG. 5 is a flowchart representative of an example portion of the example machine readable instructions of FIG. 4 to implement a match analyzer of the attribute analyzer of FIG. 2.
FIG. 6 is a block diagram of an example processor platform capable of executing the instructions of FIGS. 4 and/or 5 to implement the attribute analyzer of FIG. 2.

Wherever possible, the same reference numbers will be used throughout the drawing(s) and accompanying written description to refer to the same or like parts.

### DETAILED DESCRIPTION

Examples disclosed herein involve data backup between a client device and a server system (e.g., for purposes of restoring the client device using the backed up data from the server system). In examples herein, when backing up a data file, an attribute analyzer may determine whether a duplicate or copy of the data file is stored in a storage database of a server system to avoid uploading a copy of the data file to the storage database. For example, the attribute analyzer may retrieve and compare attributes of candidate data files in the storage database with a data file of a client device that is to be backed up. More specifically, the attribute analyzer may apply fuzzy logic to the attributes by applying appropriate weights to the attributes to determine whether a match exists between attributes of the data file and candidate attributes of candidate data files. To facilitate a backup of a data file, the attribute analyzer may create a record in a catalog of a backup server that points to corresponding backed up data (e.g., either an uploaded copy of a data file, or a previously existing copy of the data file determined to match the data) along with appropriate attributes of the data file.

As used herein, a data backup or backing up data refers to alternative data or providing access to alternative data to enable access to content of a corresponding data file (e.g., in the event of a system failure or restoring data to a system or client device).

In backup environments, multiple users and/or multiple devices may access a common storage database. Accordingly, in many instances, multiple instances of same data file (e.g., a same document, a same image, a same music file, etc.) may be stored within the same storage database of a server system of the backup environment causing unnecessary copies/duplicates to exist. Accordingly, capacity of the storage database may be limited by the multiple copies of the same data file. Examples herein limit or obviate multiple copies of a same data file by analyzing and comparing attributes of data files to be backed up and data files stored in a storage database of a backup server. Accordingly, by analyzing the attributes, a client device may not necessarily receive contents of the data file to determine whether a copy already exists in the storage database. Therefore, examples herein may increase speed and/or bandwidth when determining how data of a client device is to be backed up to a server (e.g., upload the data to a storage database of the backup server, establish a link to a copy of the data already backed up in a storage database of the backup server, etc.).

An example method includes sending a request to a server to provide candidate attributes of a candidate backup file based on attributes of a data file, the request comprising the attributes, determining that the candidate attributes received from the server match the attributes of the data file based on fuzzy logic and respective weights applied to the attributes of the data file, and recording a link to the candidate backup file to back up the data file and to avoid a duplicate of the candidate backup file in a database of the server.

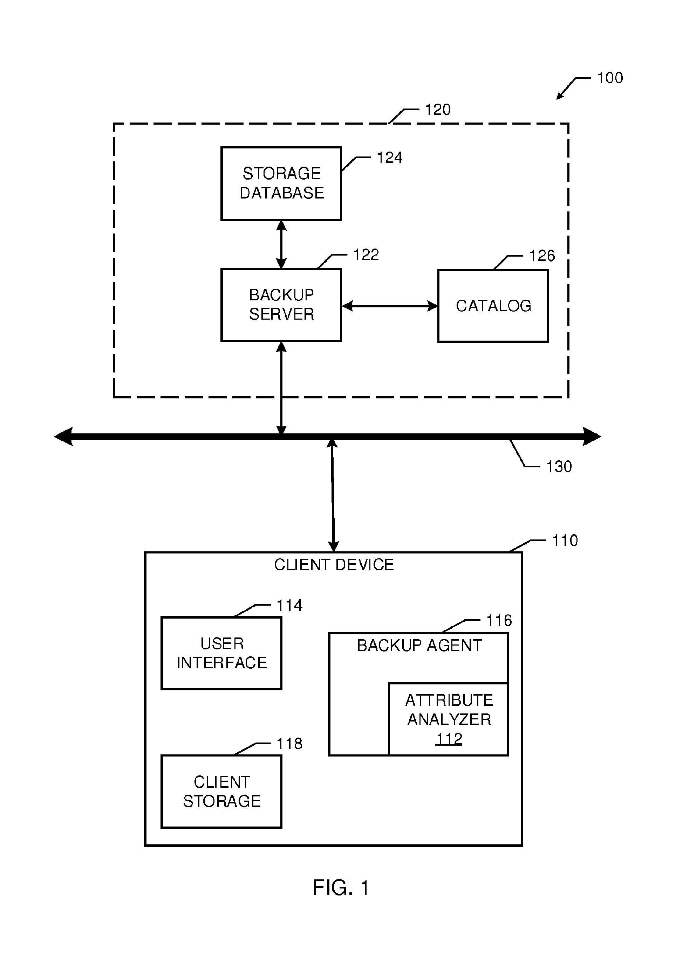

FIG. 1 is a schematic diagram of an example backup environment 100 with a client device 110 including an attribute analyzer 112 implemented in accordance with an aspect of this disclosure. In the example of FIG. 1, the client device 110 communicates with a server system 120 via a network 130. The example client device 110 includes a user interface 114, a client storage 116, and a backup agent 118. In the illustrated example of FIG. 1, the backup agent 118 includes the attribute analyzer 112 constructed in accordance with examples of this disclosure. In some examples, the attribute analyzer 112 may be implemented by any other component or element (e.g., a processor, a controller, etc.) of the client device 110.

The example server system 120 includes a backup server 122, a storage database 124, and a catalog 126. In examples herein, the backup sever 122 facilitates communication with the client device 110 and manages backup of data (which may be referred to herein interchangeably as a data file or data files) to the storage database 124 via the catalog 126. In examples herein, the catalog 126 stores information (e.g., address (or location) and attributes corresponding to data (e.g., backup data) stored in the storage database 124. For example, records in the catalog 126 may include respective sets of attributes (e.g., a single attribute or a plurality of attributes) and pointers to data files (or content of data files) stored in the storage database 124 for the client device 110 and/or any other device in communication with the server system 120. Example attributes stored in the catalog 126 may include name, size, date information (e.g., date of creation, date of last modification, etc.), data type or file type (e.g., image, document, text, video, audio, application, executable, etc.), format, hash value of file content, the pointers to the data files (or device information (addresses, reference identifiers, etc.) storing the data files), etc.

The example client device 110 may be a personal computer (e.g., a desktop computer, a laptop computer, etc.), a mobile device (e.g., a smartphone, a tablet computer, etc.), or any other type of computing device. In some examples, though not illustrated in FIG. 1, a plurality of client devices similar to the client device 110 of FIG. 1 may be in communication with the client device 110 and/or the server system 120 via the network 130. In examples herein, the attribute analyzer 112 may monitor and control backup of data file(s) from the client device 110 to the server system 120.

The example user interface 114 may be implemented by any input device(s) (e.g., a mouse, a keyboard, a touchscreen, a microphone, etc.) and any output device(s) (e.g., a display, a touchscreen, a speaker, etc.) to facilitate user interaction with the client device 110. Accordingly, a user may access data file(s), application(s), etc. via the user interface 114. In examples herein, the user interface 114 may enable a user to initiate or manage backup of data file(s) (e.g., images, documents, videos, objects, etc.) to the server system 120 of FIG. 1. For example, a user may select settings (e.g., timing settings, frequency settings, size settings, capacity threshold settings, etc.) for backing up data from the client device 110 to the server system 120.

The example backup agent 116 facilitates back up of data (e.g., data files, such as images, text, audio files, video files, etc.) from the client storage 118 (e.g., from a storage device of the client device 110) to the server system 120 of FIG. 1. For example, the backup agent 116 may identify data to be backed up to the server system 120 and initiate a backup of the data to the server system 120. The example backup agent 116 utilizes the attribute analyzer 112 in accordance with examples herein. In examples herein, the backup of the data to the server system 120 may include uploading the data to the server system 120 or identifying a copy of the data stored in the storage database 124 and directing the client device 110 to the copy. Furthermore, the backup may include creating, updating, or adding a record to the catalog 126. The example record may include a link to backed up data (e.g., an uploaded copy of the data to be backed up, a copy of the backed up data previously stored in the storage database, etc.) and corresponding attributes of the backed up data.

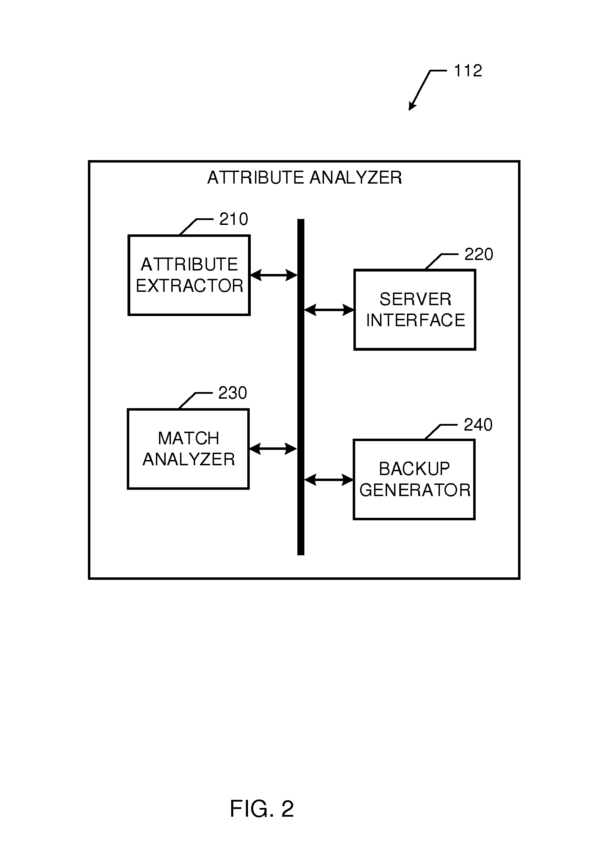

FIG. 2 is a block diagram of an example attribute analyzer 112 that may be used to implement the attribute analyzer 112 of FIG. 1. The example attribute analyzer 112 of FIG. 2 includes an attribute extractor 210, a server interface 220, a match analyzer 230, and a backup generator 240. In examples herein, the attribute extractor 210 retrieves attributes of data files to be backed up from the client device 110 to the server system 120. Furthermore, the example match analyzer 230 compares the attributes of the data files to attributes of candidate data files received from the server system 120 via the server interface 220 that may match the data/data files. And finally, the backup generator 240 determines and/or indicates whether the data file is to be uploaded to the server system 120 and/or linked to data (e.g., candidate data such as a copy or substantial copy of the data file) stored in the storage database 124 of the server system 120 based on the analysis of the match analyzer 230. The backup generator 240 may further provide a record to the backup server 122 for storage in the catalog that includes the link to the backed up data (regardless of whether it was uploaded or previously stored in the storage database 124) and the attributes extracted by the attribute extractor 210.

The example attribute extractor 210 may receive an indication (e.g., from the backup agent 118 or the user interface 114) that a data file is to be backed up to the server system 120 or a request to back up a data file to the server system 120. Accordingly, the attribute extractor 210 may determine or identify an attribute or a plurality of attributes (e.g., name, size, date information, data type or file type, format, hash value of content, etc.) of the data file. For example, the attribute extractor 210 may parse or extract the attributes from the data file using any suitable technique. The attribute extractor 210 may then provide the attribute(s) to the server interface 220 and/or the match analyzer 230 for analysis.

The example server interface 220 facilitates communication between the attribute analyzer 112 (or the backup agent 116) and the backup server 122 of the server system 120. For example, the server interface 220 may establish a communication link via the network 130 to send/receive messages, requests, etc. In examples herein, upon receiving extracted attributes from the attribute extractor 210, the server interface 220 may send a request to the backup server 122 to provide candidate attributes of data or data file(s) that include the attributes of the data or data file(s) to be backed up. As used herein, the candidate attributes are attribute(s) of data file(s) stored in the storage database 124 of the server system and correspond to attributes of data that has been added in catalog 126. Accordingly, the example server interface 220 may send a request that includes the extracted attributes to the backup server 122.

In examples herein, in response to receiving a request for attributes from the server interface 220 of the attribute analyzer 112, the backup server 122 may refer to the catalog 126 to identify any candidate data or candidate data file(s) in the storage database 124 that have the corresponding attributes. The example backup server 122 may then reply with candidate attributes of a candidate data file or candidate sets of attributes of corresponding candidate data files (e.g., each set of attributes corresponding to single candidate data set or candidate data file). The example server interface 220 may receive the candidate attributes of candidate backup files and forward the candidate attributes onto the match analyzer 230 for analysis.

The example match analyzer 230 analyzes attributes of the data or data file to be backed up and candidate attributes of candidate data files that may match the data or data file to be backed up. For example, the match analyzer 230 may compare the attributes and the candidate attributes to determine whether the data file(s) and the candidate data file(s) are a match or match each other to within a threshold percentage. In examples herein, the match analyzer 230 may apply fuzzy logic in a comparison of the attributes and the candidate attributes to determine a likelihood (a threshold percentage) that the attributes and candidate attributes are a match. For example, the match analyzer 230 may apply a weight to each of the attributes. The example weight may be a representative value (e.g., from zero to 1 (0-1)) indicative of the importance that the attribute matches a candidate attribute of the candidate data file(s). The example weights may be stored in backup settings for the client device, 110, the backup agent 116, or the attribute analyzer 112. In some examples, the backup settings for the weights may include default weights (e.g., weights determined to find a relatively most accurate result), weights established based on characteristics (e.g., file type (image, document, etc.), virtualized files, database files, etc.) of the data/data file being backed up, or weights determined or set from user input received via the user interface 114 of the client device 110.

In some examples, the match analyzer 230 may determine that there is a match when the attribute comparison calculates a match percentage that satisfies a first threshold (e.g., greater than 50% match, greater than 75% match, greater than 90% match, etc.). On the other hand, the match analyzer 230 may determine that there is not a match when the fuzzy logic of the attribute comparison calculates a match percentage that satisfies a second threshold (e.g., less than 50% match, less than 30% match, etc.). In some examples, the match analyzer 230 may determine a potential for a match (e.g., maybe match) when the fuzzy logic of the attribute comparison satisfies two thresholds (e.g., between 30% match and 90% match, between 50% match and 90% match, etc.). In the event that the match analyzer 230 determines there is a potential for a match (e.g., the fuzzy logic comparison results in a percentage match between a "match" threshold and a "no match" threshold), the match analyzer 230 may perform further analysis of the data/data files in comparison to the candidate data/candidate data files. For example, the match analyzer 230 may compute a hash of the data/data file to be backed up and compare the hash value to a hash value of the candidate data files received/retrieved by the server interface 220. The example hash value(s) of the candidate data file(s) may have been received in a same communication as the data attributes. The example match analyzer 230 may provide results (e.g., match, no match) of the match analysis (e.g., fuzzy logic comparison) to the backup generator 240 to handle the backup of the data/data file.

The example backup generator 240 of FIG. 2 generates a backup of the data file, including a record to be stored in the catalog 126, based on whether the match analyzer 230 determines a match between the data files and the candidate data files according the attribute analysis. In examples herein, when the match analyzer 230 determines that no match is found between the attributes of the data file and the candidate attributes of the candidate data file, the backup generator 240 may generate a backup of the data file by uploading a copy of the data file (or the data file itself) to the server system 120 for storage on the storage database 124. In examples where the match analyzer 230 determines that there is a match between the attributes of the data file and the candidate attributes of the candidate data file, the backup generator may establish a link (e.g., a pointer, a reference identifier, etc.) to the candidate data file to direct the client device 110 (or any other device in communication with the backup server 122) to the candidate data file when restoring the data file. For example, the backup generator 240 may provide the link to the server interface 220 to request the backup server 122 to record a pointer in a record of the catalog 126..

Furthermore, in some examples, the backup generator 240 may provide the attribute(s) of the data file to the backup server 122 for storage in the catalog 126. For example, the link to the client device 110 may include or be included in the attributes of the data file stored in the catalog 126 and may comprise a pointer to an address, information (e.g., reference identifier) of a device (e.g., tape number, device number, etc.), location, etc. of the storage database 124 corresponding to a backup of the data file (e.g., the candidate backup file or a copy of the data file). Accordingly, when the backup generator generates a backup (regardless of a match being identified by the match analyzer 230), the link may be included in a new record of the catalog 126 along with or within the attributes of the data file. Furthermore, upon a restore operation, when the match analyzer 230 determines there is a match, the example backup server 122 may retrieve the candidate data file (or content of the candidate data file) from the storage database 124 using the link and provide the attributes (which may be different from the candidate attributes) of the data file from the catalog 126 to the client device 110 (or any other device requesting the backup data file). In examples when the match analyzer 230 determines there is no match between the attributes of the data file and any candidate attributes (and difference in hash values of the content of the data file and the candidate data file), the backup generator 240 may provide a link to a newly uploaded data file (or copy of the data file) stored in the storage database 124 along with the attributes of the data file. Thus, the new record may provide the link to the backed up data file and appropriate attributes of the data file during a restore operation of the client device 110 or any other device (e.g., a device seeking to download data corresponding to data of the client device 110 from the storage database 124).

Accordingly, in examples herein, when a match is found, the attribute analyzer 112 may prevent sending or uploading duplicate data files to the storage database 124. Furthermore, when the client device 110 initiates a restore operation that retrieves the backup data of the client device 110 from the server system 120, the backup server 122 may provide the appropriate data and attributes to the client device 110 by referring to the catalog 126 (which stores information (e.g., a link, a pointer, device information, etc.) corresponding to a location of the backed up data in the storage database 124 and the corresponding attributes).

While an example manner of implementing the attribute analyzer 112 of FIG. 1 is illustrated in FIG. 2, at least one of the elements, processes and/or devices illustrated in FIG. 2 may be combined, divided, re-arranged, omitted, eliminated and/or implemented in any other way. Further, the attribute extractor 210, the server interface 220, the match analyzer 230, the backup generator 240, and/or, more generally, the example attribute analyzer 112 of FIG. 2 may be implemented by hardware and/or any combination of hardware and executable instructions (e.g., software and/or firmware). Thus, for example, any of the attribute extractor 210, the server interface 220, the match analyzer 230, the backup generator 240, and/or, more generally, the example attribute analyzer 112 could be implemented by at least one of an analog or digital circuit, a logic circuit, a programmable processor, an application specific integrated circuit (ASIC), a programmable logic device (PLD) and/or a field programmable logic device (FPLD). When reading any of the apparatus or system claims of this patent to cover a purely software and/or firmware implementation, at least one of the attribute extractor 210, the server interface 220, the match analyzer 230, and/or the backup generator 240 is/are hereby expressly defined to include a tangible machine readable storage device or storage disk such as a memory, a digital versatile disk (DVD), a compact disk (CD), a Blu-ray disk, etc. storing the executable instructions. Further still, the example attribute analyzer 112 of FIG. 2 may include at least one element, process, and/or device in addition to, or instead of, those illustrated in FIG. 2, and/or may include more than one of any or all of the illustrated elements, processes and devices.

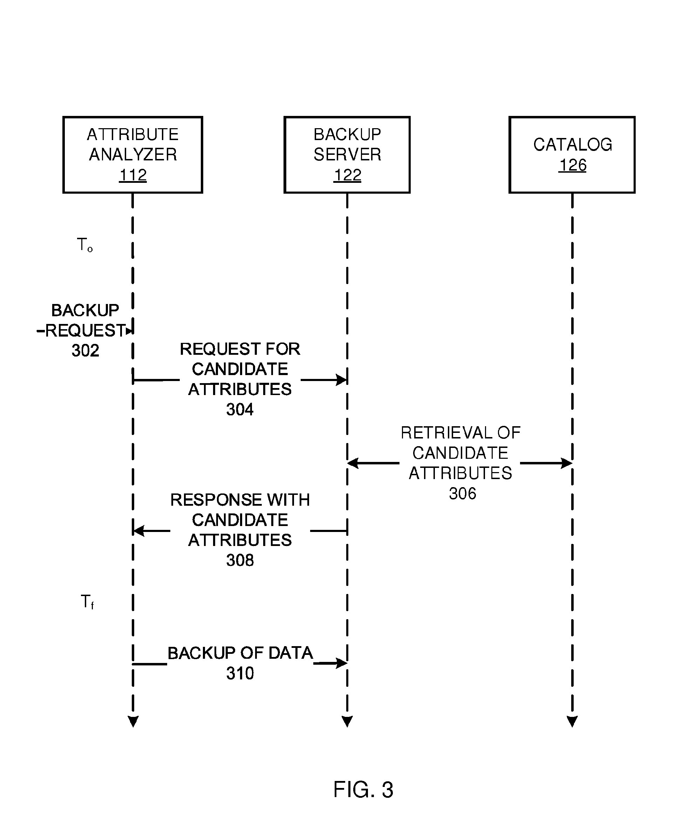

FIG. 3 is a message diagram representative of example communications exchanged in the example backup environment 100 of FIG. 1, including example communications from/to the example attribute analyzer 112 of FIG. 2. The illustrated example communications 302-310 sequentially occur from time Tₒ to time T_{f} (represented by dotted lines). Initially, the attribute analyzer 112 receives a communication 302 indicating that data of the client device 110 is to be backed up to the server system 120. Accordingly, the attribute analyzer 112 (via the server interface 220) may send a request 304 to the backup server 122 to provide attributes similar to the attributes extracted from the data to be backed up.

Accordingly, the backup server 122 retrieves the candidate attributes from the catalog 126 via communication 306. The backup server 122 then provides the candidate attributes to the attribute analyzer 112 of the client device 110 via a response 308. Upon receipt of the response 308, the match analyzer 230 compares the candidate attributes to the attributes of the data file in accordance with examples herein. Based on the analyzed candidate attributes, the backup generator 240 of the attribute analyzer 112 backs up the data via communication 310 by uploading a copy of the data to the backup server 122 to store in the storage database 124 or by instructing the backup server 122 to record a link to the candidate data file in the storage database 124 to back up the data. Attributes of data file may be updated in the catalog 126 via the communication 310 regardless of whether the match analyzer 230 determines a match was found. For example, the communication 310 may instruct the backup server 122 to create a record in the catalog 126 including the attributes and a pointer to the data file (or device information corresponding to a location or address of the data file).

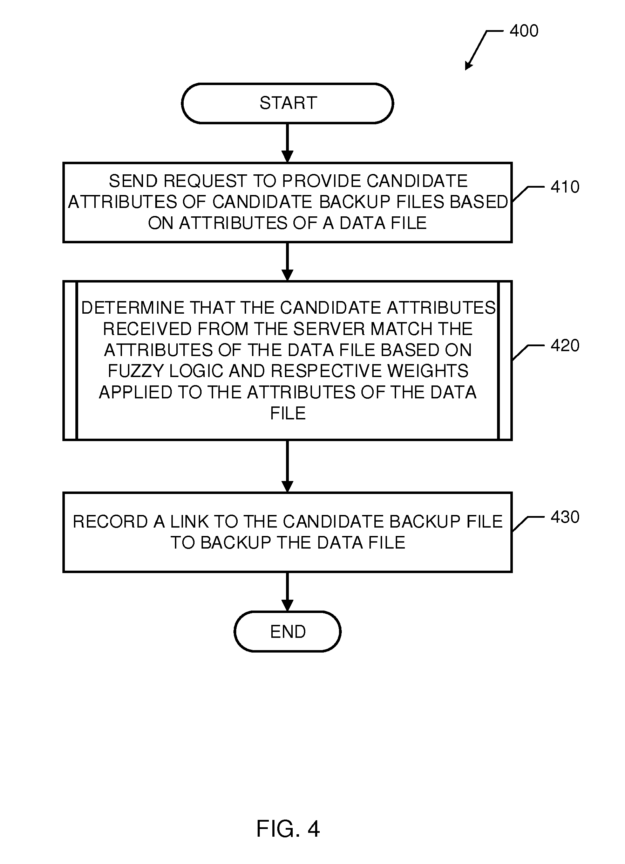

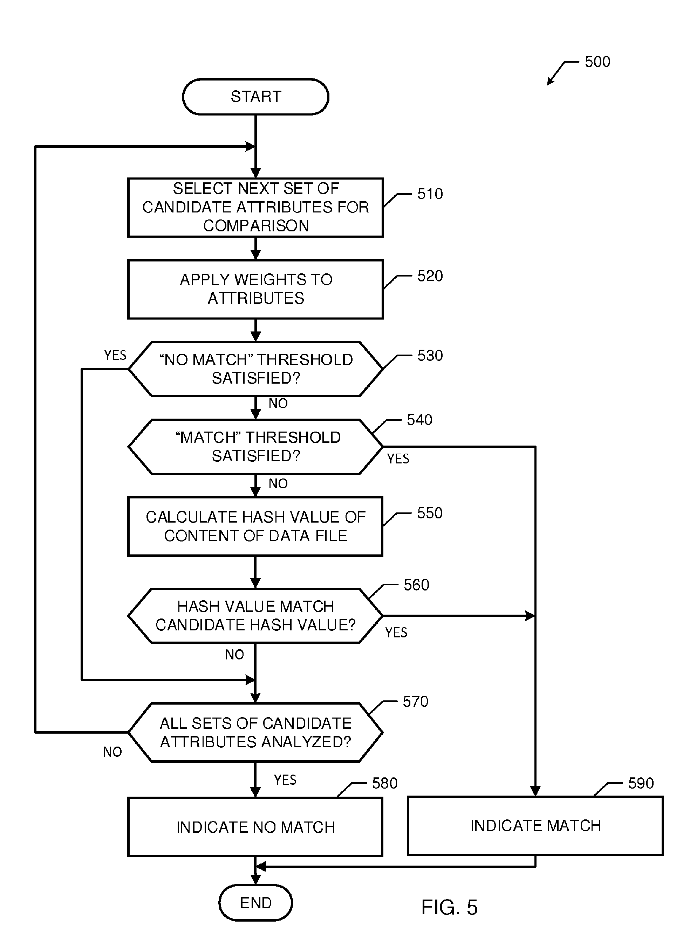

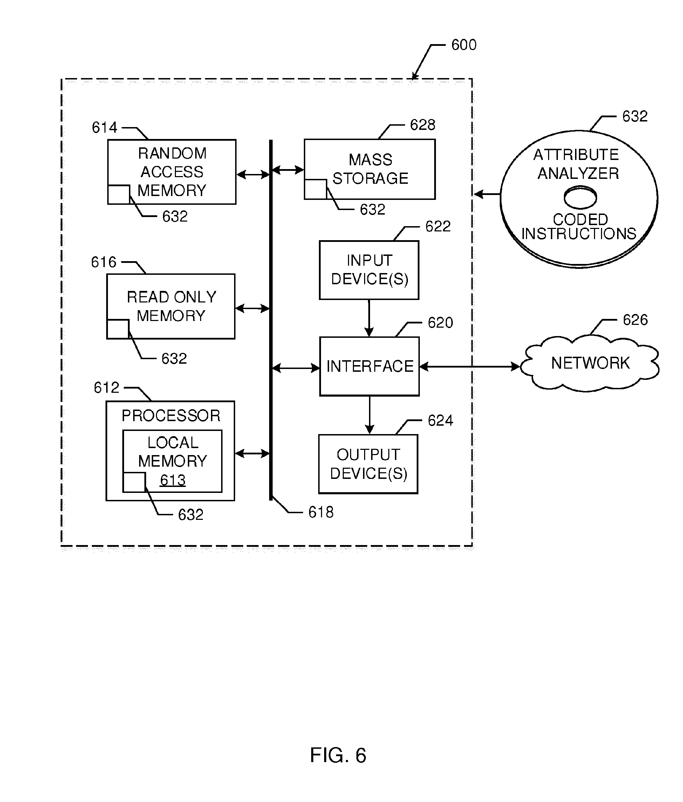

Flowchart(s) representative of example machine readable instructions for implementing the attribute analyzer 112 of FIG. 2 is/are shown in FIGS. 4 and/or 5. In this example, the machine readable instructions comprise a program/process for execution by a processor such as the processor 612 shown in the example processor platform 600 discussed below in connection with FIG. 6. The program(s)/process(es) may be embodied in executable instructions (e.g., software) stored on a tangible machine readable storage medium such as a CD-ROM, a floppy disk, a hard drive, a digital versatile disk (DVD), a Blu-ray disk, or a memory associated with the processor 612, but the entire program/process and/or parts thereof could alternatively be executed by a device other than the processor 612 and/or embodied in firmware or dedicated hardware. Further, although the example program(s)/process(es) is/are described with reference to the flowchart illustrated in FIGS. 4 and/or 5, many other methods of implementing the example attribute analyzer 112 may alternatively be used. For example, the order of execution of the blocks may be changed, and/or some of the blocks described may be changed, eliminated, or combined.

The example process 400 of FIG. 4 begins with an initiation of the attribute analyzer 112 (e.g., upon startup, upon instructions from a user, upon startup of a device implementing the attribute analyzer 112 (e.g., the client device 110 or the backup agent 116), etc.). The example process 400 may be executed to back up a data file without uploading a duplicate copy of the data file to a backup server when a copy of the data file exists on the backup server. At block 410 of FIG. 4, the server interface 220 sends a request to a server to provide candidate attributes of candidate backup files based on attributes of a data file (e.g., attributes extracted by the attribute extractor 210). At block 420, the match analyzer 230 determines that the candidate attributes received from the server match the attributes of the data file based on fuzzy logic and respective weights applied to the attributes of the data file. For example, as discussed further below in connection with FIG. 5, the match analyzer 230 may apply fuzzy logic to the attributes of the data file relative to the candidate attributes of the candidate backup files to identify a candidate backup file that matches the data file.

At block 430, the backup generator 240 records a link to a backup file to back up the data file to the server system 120. For example, at block 430, the backup generator 240 may record (or establish) the link by instructing the backup server 122 to include (record) a pointer in the catalog 126 to direct the client device 110 to the candidate backup file in the storage database 124 during a restore operation. Additionally, at block 430, the backup generator 240 may upload or send the extracted attributes to the backup server 122 to be recorded in the catalog 126 along with the link. Accordingly, when the client device 110 attempts a restore operation, the client device 110 may retrieve the candidate backup file from the storage database 124 (rather than a duplicate copy of the data file in the storage database) and appropriate attributes (e.g., attributes from a most recently accessed version of the data file). After block 430, the example process 430 ends.

The example process 500 of FIG. 5 begins with an initiation of the match analyzer 230 of the attribute analyzer 112 (e.g., in response to receiving a request to back up a data file, in response to receiving candidate attributes from a server, etc.). The example process 500 of FIG. 5 may be executed to implement block 420 of FIG. 4. At block 510, the match analyzer 230 selects a next set of candidate attributes for comparison with attributes of a data file extracted by the attribute extractor 210. The example set of candidate attributes may include a single candidate attribute of a candidate backup file or a plurality of candidate attributes of a candidate backup file. At block 520, the match analyzer 230 applies weights to the candidate attributes. The example weights may be based on settings of the backup agent 116, settings of the client device 110, settings received via the user interface 114, or settings based on characteristics of the data file.

At block 530, fuzzy logic is applied in a comparison of the attributes of the data file and the candidate attributes of the selected candidate data file. If, at block 530, the match analyzer 230 determines that a "no match" threshold is satisfied (e.g., the fuzzy logic analysis found a less than 50% match between the attributes and the candidate attributes), then control advances to block 570. However, if the match analyzer 230 determines that the "no match" threshold is not satisfied (e.g., which indicates a likelihood or potential for a match), then the match analyzer 230, at block 540, determines whether a "match" threshold is satisfied in a comparison of the attributes and the candidate attributes (e.g., greater than a 90% match). If, at block 540, the match analyzer 230 determines that the "match" threshold has been satisfied, then control advances to block 590.

However, if, at block 540, the match analyzer 230 determines that the "match" threshold has not been satisfied, then the match analyzer 230 calculates a hash value from content of the data file. At block 550, the match analyzer determines whether the hash value matches a candidate hash value (which may be included in the candidate attributes). If, at block 560, the match analyzer 230 determines that the hash value matches the candidate hash value, then control advances to block 590. If, at block 560, the match analyzer 230 determines that the hash value does not match the candidate has value, then control advances to block 570.

At block 570 of the illustrated example of FIG. 5, the match analyzer 570 determines whether all sets of candidate attributes received have been analyzed. If not, then control returns to block 510, and the match analyzer may iteratively analyze the next set of candidate attributes. If, all sets of the candidate attributes have been analyzed, then, at block 580, the match analyzer 230 may indicate to the backup generator that there is no match (and the backup generator may subsequently upload a copy of the data file to the server system 120). At block 590, after determining the attributes match the candidate attributes (block 540) and/or the data file hash matches the candidate hash (block 560), the match analyzer 230 indicates a match to the backup generator 240 (and the backup generator 240 may subsequently establish a link between the client device 110 and the candidate backup file and may send the attributes of the data file to the backup server 122 for storage as a new record in the catalog 126). After block 580 or block 590, the example process 500 ends.

As mentioned above, the example processes of FIGS. 4 and/or 5 may be implemented using coded instructions (e.g., computer and/or machine readable instructions) stored on a tangible machine readable storage medium such as a hard disk drive, a flash memory, a read-only memory (ROM), a compact disk (CD), a digital versatile disk (DVD), a cache, a random-access memory (RAM) and/or any other storage device or storage disk in which information is stored for any duration (e.g., for extended time periods, permanently, for brief instances, for temporarily buffering, and/or for caching of the information). As used herein, the term tangible machine readable storage medium is expressly defined to include any type of machine readable storage device and/or storage disk and to exclude propagating signals and to exclude transmission media. As used herein, "computer readable storage medium" and "machine readable storage medium" are used interchangeably. Additionally or alternatively, the example processes of FIGS. 4 and/or 5 may be implemented using coded instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory machine readable medium is expressly defined to include any type of machine readable storage device and/or storage disk and to exclude propagating signals and to exclude transmission media. As used herein, when the phrase "at least" is used as the transition term in a preamble of a claim, it is open-ended in the same manner as the term "comprising" is open ended. As used herein the term "a" or "an" may mean "at least one," and therefore, "a" or "an" do not necessarily limit a particular element to a single element when used to describe the element. As used herein, when the term "or" is used in a series, it is not, unless otherwise indicated, considered an "exclusive or."

FIG. 6 is a block diagram of an example processor platform 600 capable of executing the instructions of FIGS. 4 and/or 5 to implement the attribute analyzer 112 of FIG. 2. The example processor platform 600 may be or may be included in any type of apparatus, such as a personal computer, a mobile device (e.g., a cell phone, a smart phone, a tablet, etc.), a personal digital assistant (PDA), an Internet appliance or any other type of computing device.

The processor platform 600 of the illustrated example of FIG. 6 includes a processor 612. The processor 612 of the illustrated example is hardware. For example, the processor 612 can be implemented by at least one integrated circuit, logic circuit, microprocessor or controller from any desired family or manufacturer.

The processor 612 of the illustrated example includes a local memory 613 (e.g., a cache). The processor 612 of the illustrated example is in communication with a main memory including a volatile memory 614 and a nonvolatile memory 616 via a bus 618. The volatile memory 614 may be implemented by Synchronous Dynamic Random Access Memory (SDRAM), Dynamic Random Access Memory (DRAM), RAMBUS Dynamic Random Access Memory (RDRAM) and/or any other type of random access memory device. The non-volatile memory 616 may be implemented by flash memory and/or any other desired type of memory device. Access to the main memory 614, 616 is controlled by a memory controller.

The processor platform 600 of the illustrated example also includes an interface circuit 620. The interface circuit 620 may be implemented by any type of interface standard, such as an Ethernet interface, a universal serial bus (USB), and/or a peripheral component interconnect (PCI) express interface.

In the illustrated example, at least one input device 622 is connected to the interface circuit 620. The input device(s) 622 permit(s) a user to enter data and commands into the processor 612. The input device(s) can be implemented by, for example, an audio sensor, a microphone, a camera (still or video), a keyboard, a button, a mouse, a touchscreen, a track-pad, a trackball, isopoint and/or a voice recognition system. The example input device(s) may be used to implement the user interface 114 of FIG. 1.

At least one output device 624 is also connected to the interface circuit 620 of the illustrated example. The output device(s) 624 can be implemented, for example, by display devices (e.g., a light emitting diode (LED), an organic light emitting diode (OLED), a liquid crystal display, a cathode ray tube display (CRT), a touchscreen, a tactile output device, a light emitting diode (LED), a printer and/or speakers). The interface circuit 620 of the illustrated example, thus, may include a graphics driver card, a graphics driver chip or a graphics driver processor. The example output device(s) may be used to implement the user interface 114 of FIG. 1.

The interface circuit 620 of the illustrated example also includes a communication device such as a transmitter, a receiver, a transceiver, a modem and/or network interface card to facilitate exchange of data with external machines (e.g., computing devices of any kind) via a network 626 (e.g., an Ethernet connection, a digital subscriber line (DSL), a telephone line, coaxial cable, a cellular telephone system, etc.).

The processor platform 600 of the illustrated example also includes at least one mass storage device 628 for storing executable instructions (e.g., software) and/or data. Examples of such mass storage device(s) 628 include floppy disk drives, hard drive disks, compact disk drives, Blu-ray disk drives, RAID systems, and digital versatile disk (DVD) drives.

The coded instructions 632 of FIGS. 4 and/or 5 may be stored in the mass storage device 628, in the local memory 613 in the volatile memory 614, in the non-volatile memory 616, and/or on a removable tangible machine readable storage medium such as a CD or DVD.

From the foregoing, it will be appreciated that the above disclosed methods, apparatus and articles of manufacture provide a backup service based on analyzing attributes of data files and candidate data files stored on a server. Example analysis herein uses fuzzy logic and weights applied to the attributes to determine whether a copy of the data file to be backed up exists in a backup storage database of a backup server system. The examples herein may provide enhanced accuracy with enhanced speed to avoid backing up duplicate copies of a data file and relatively increase available bandwidth between client and server when backing up data files as the attributes sent between client and server use less bandwidth than sending data files.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

## Claims

1. A method comprising:
sending a request to a server to provide candidate attributes of a candidate backup file based on attributes of a data file, the request comprising the attributes;
determining that the candidate attributes received from the server match the attributes of the data file based on fuzzy logic and respective weights applied to the attributes of the data file; and
recording a link to the candidate backup file stored in a storage database of the server to back up the data file and to avoid a duplicate of the candidate backup file in the storage database of the server.

2. The method as defined in claim 1, further comprising
receiving a plurality of sets of candidate attributes from the server corresponding to a plurality of candidate backup files, the candidate attributes from a set of the plurality of sets of candidate attributes; and
iteratively analyzing the plurality of sets of candidate attributes to determine a match between the candidate attributes and the attributes of the data file.

3. The method as defined in claim 1, further comprising:
uploading the attributes to a new record of a catalog of the server, the new record comprising the link.

4. The method as defined in claim 1, further comprising:
assigning the respective weights to the attributes of the data file and the candidate attributes based on backup settings corresponding to the data file.

5. The method as defined in claim 1, determining that the candidate attributes match the attributes of the data file when a match percentage calculated from the fuzzy logic satisfies a first threshold percentage.

6. The method as defined in claim 5, further comprising:
calculating a hash value of the data file when the match percentage satisfies a second threshold percentage; and
determining that the data file matches the candidate backup file based on a comparison of the hash value and a candidate hash value from the candidate attributes.

7. The method as defined in claim 1, the request instructing the server to retrieve the candidate attributes from a catalog of backup data files stored by the server.

8. The method of claim 1, further comprising:
sending a second request to the server to provide second candidate attributes of second candidate backup files based on second attributes of a second data file, the request comprising the second attributes;
determining that the second candidate attributes received from the server do not match the second attributes of the second data file based on the fuzzy logic and the respective weights correspondingly applied to the second attributes of the second data file; and
uploading a copy of the second data file along with attributes to the server to back up the second data file.

9. A non-transitory machine readable storage medium comprising instructions that, when executed, cause a machine to at least:
request a server to provide candidate attributes from a catalog in communication with the server to a client device, the server to retrieve the candidate attributes from the catalog based on attributes of a data file received from a client device;
determine that the candidate attributes match the attributes of the data file based on weights applied to the attributes and fuzzy logic used to compare the candidate attributes and the attributes of the data file; and
record a link in the catalog to the candidate backup file to back up the data file in a storage database of the server.

10. The non-transitory machine readable storage medium of claim 9, wherein the instructions further cause the machine to:
record the link by:
instructing the server to include a pointer in a record of the catalog to direct the client device to the candidate backup file in the storage database during a restore operation; and
uploading the attributes to the record of the catalog.

11. The non-transitory machine readable storage medium of claim 9, wherein the instructions further cause the machine to:
determine the candidate attributes match the attributes of the data file based on a match percentage calculated from the fuzzy logic satisfying a first threshold percentage.

12. The non-transitory machine readable storage medium of claim 9, wherein the instructions further cause the machine to:
determine that the match percentage satisfies a second threshold such that the match percentage is between the first threshold and the second threshold; and
determine that the candidate data file matches the data file based on a candidate hash value from the candidate attributes and a hash value of content of the data file.

13. The non-transitory machine readable storage medium of claim 9, wherein the candidate back up file was uploaded to the storage database by a second client device that is different from the first client device.

14. An apparatus comprising:
an attribute extractor to identify attributes of a data file stored in a client device;
a server interface to send a request to a server for a set of candidate attributes, the request comprising the attributes of the data file and the candidate attributes corresponding to candidate data files;
a match analyzer to determine whether a candidate data file from the candidate data files matches the data file based on a comparison of the attributes of the data file and the candidate attributes, the comparison utilizing fuzzy logic and respective weights applied to the attributes of the data file; and
a backup generator to:
upload a copy of the data file to the server when the match analyzer determines that the data file does not match one of the candidate data files and a record to a catalog of the server, the record comprising the attributes and a pointer to the copy of the data file in the server, or
upload the attributes to the catalog of the server with a link to the candidate data file when the match analyzer determines that the data file does match the candidate data file.

15. The apparatus of claim 14, wherein the match analyzer is further to:
determine a match percentage between the data file and the candidate data file;
in response to the match percentage satisfying a threshold, calculate a hash value from content of the data file;
compare the hash value to a candidate hash value from the candidate attributes; and
determine the data file matches the candidate data file based on the hash value and the candidate hash value.
